Europäisches Patentamt

European Patent Office

Office européen des brevets

(19)

(11) Publication number: **0 028 922**
**A2**

# (12) EUROPEAN PATENT APPLICATION

(21) Application number: **80303967.6**

(22) Date of filing: **06.11.80**

(51) Int. Cl.³: **H 01 M 4/96**

(30) Priority: **09.11.79 US 92793**

(43) Date of publication of application:
**20.05.81 Bulletin 81/20**

(84) Designated Contracting States:
**DE FR GB SE**

(71) Applicant: **YARDNEY ELECTRIC CORPORATION**
**82 Mechanic Street**
**Pawcatuck, Connecticut(US)**

(72) Inventor: **Cercone, Ronald J.**
**Star route 1**
**Machias, Maine 04654(US)**

(72) Inventor: **Kuklinski, Jaroslaw**
**834 Vauxhall Street**
**Ext., Waterford, CT 06385(US)**

(74) Representative: **Wilson, Joseph Martin et al,**
**Withers & Rogers 4 Dyers Buildings Holborn**
**London, EC1N 2JT(GB)**

(54) Improved inexpensive electrode for metal-air cells and method of making same.

(57) The electrode is self-supporting, inexpensive and is of the throwaway or non-rechargeable type utilizable in metal-air cells and batteries. It comprises a readily corrodible, inexpensive current collector, preferably of iron or steel or copper, and an electrochemically active layer. The current collector has a hydrophobic coating, preferably of polytetrafluoroethylene or the like, to at least partially protect it from corrosion. The electrochemically active layer is secured to the current collector through the hydrophobic coating so as to form therewith a self-supporting electrode. This layer comprises particulate carbon catalyst with a hydrophobic binder compatible with the hydrophobic coating on the collector and fused thereto and present in an amount sufficient to bind the carbon particles into a coherent layer. The binder aids the coating in protecting the collector. The use of expensive, separately generated, thin hydrophobic films placed into the structure during its formation is totally obviated so that a lower cost is achieved while still providing an electrode having suitable electrochemical activity.

Croydon Printing Company Ltd.

- 1 -

# IMPROVED INEXPENSIVE ELECTRODE FOR METAL-AIR CELLS
## AND METHOD OF MAKING SAME

## Background of the Disclosure

### Field of the Invention

The present invention generally relates to electrochemical cells and more particularly relates to an improved, inexpensive electrode for a non-rechargeable metal-air cell or battery.

## Prior Art

Conventional electrodes, such as cathodes, for metal-air cells and batteries employ separately generated and applied hydrophobic films which are relatively expensive. Moreover, such cathodes also generally employ non-corroding collectors formed of expensive metals such as nickel, silver, or the like. Certain of such cathodes further employ a significant concentration of noble metals or the like in the catalytic portion of the electrode, so that the overall cost of such cathode is very substantial.

It would be very desirable to be able to provide lower cost cathodes for metal-air cells, which cathodes could be of the throwaway or non-rechargeable type and yet provide adequate electrical activity.

## Summary of the Invention

The foregoing needs have been satisfied by the improved, inexpensive throwaway electrode of the present invention. The electrode is for use in an electrochemical metal-air cell or battery. The electrode is substantially as set forth in the Abstract above. Thus, the electrode comprises a cathode which includes a current collector of a readily corrodible, inexpensive metal such as iron or copper bonded to an electrochemically active layer. Such layer comprises carbon particles bonded together by a suitable hydrophobic binder. The current collector has a coating of a hydrophobic material such as polytetrafluoroethylene or the like to protect it against corrosion. The binder is joined to the collector coating and is present in the electrode in a concentration sufficient to aid in protecting the collector from corrosion.

-2-

Expensive powdered metals, and metal salts and the like in the catalytic layer are obviated, as are expensive collector metals, such as nickel, silver and the like. There is no need for the electrodeposition of noble metals onto components of the catalytic layer, nor does the electrode employ costly hydrophobic films separately generated and separately added to the laminate, as in conventional metal-air electrodes. The air cathode of the present invention is particularly suitable for use in primary cells and batteries employing megnesium, calcium, aluminum and the like anodes for throwaway applications where various salt solutions of a corrosive nature such as sodium chloride and the like are the electrolytes. Excellent dis- charges and wet stands of from about 15 to about 30 hours have been obtained, utilizing the cathode of the present invention in such metal-air cells. Further features of the present invention are set forth in the following detailed description and accompanying drawings.

## Drawings

Figure 1 is a schematic side elevation of a preferred embodiment of the improved low cost metal-air cathode of the present invention;

Figure 2 is a schematic front elevation, partly broken away, of the cathode of Fig. 1; and,

Figure 3 is an enlarged fragmentary schematic view of the area indicated by the numeral 3 in Fig. 1.

## Detailed Description

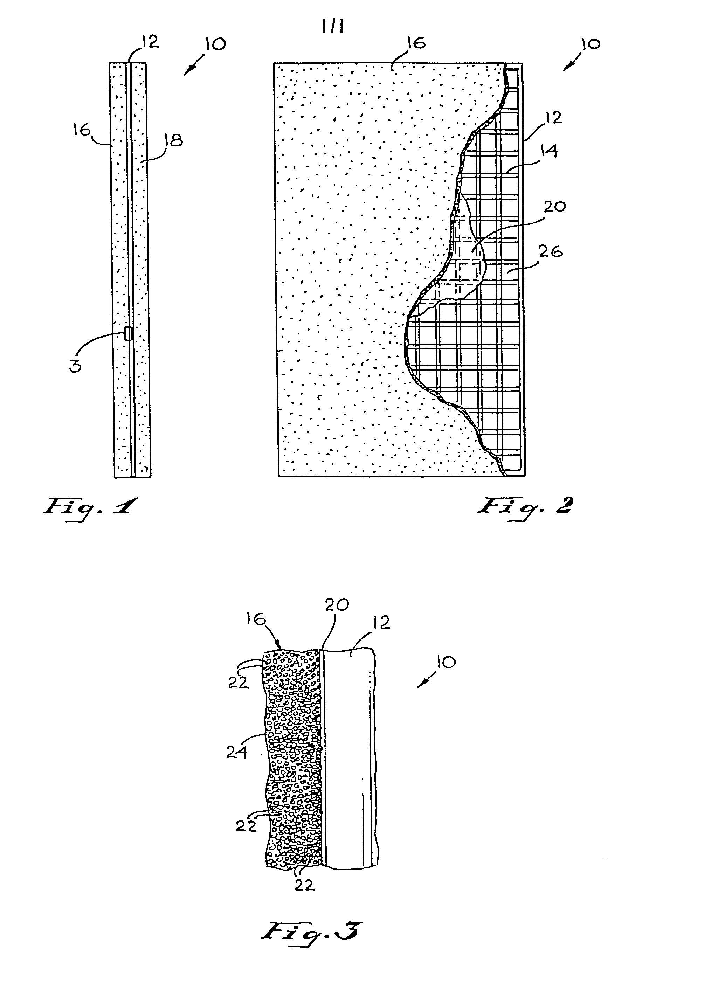

Now referring to the drawing, Figure 1 shows schematically in side elevation a preferred embodiment of the improved cathode of the present invention. Thus, an electrode 10 is depicted which comprises a

4

metallic current collector 12 in the form of a porous grid
or screen 14 (Fig. 3), to opposite sides of which adhere electrochemically active layers 16 and 18. Electrode 10 is self-
supporting, as is current collector 12. Current collector 12 may
comprise any inexpensive readily corrodible metal such as iron,
steel, copper or the like. As shown particularly in Fig. 3, and
as also indicated in Fig. 2, screen 14 is covered with a thin,
preferably between about 0.1 and about 1 mil thick, hydrophobic
coating 20. Coating 20 preferably comprises a fluorinated
polymer such as polytetrafluoroethylene which closely adheres
to screen 14, covering and protecting the same against corrosion.
Other suitable hydrophobic materials useful for this purpose
include fluoroethylene and fluoropropylene polymers. Coating
20 may be applied to the surfaces of screen 14 during fabrication of electrode 10 by, for example, dipping screen 14 into
an emulsion of the polymer and water, that is a latex and
thereafter drying screen 14 to remove the water. Other ways
of applying coating 20 to screen 14, in accordance with the
present method, can be utilized, for example, as by spraying
on the coatings, painting it on, etc.

Layers 16 and 18 each comprise a mixture of carbon
particles, preferably graphite particles, preferably having
an average particle diameter of 20μ to 200μ, in a matrix
of hydrophobic binding material fusible with coating 20.
Thus, Fig. 3 depicts a plurality of carbon particles 22 disposed
in layer 16 and bound together by binding material 24. Binder
24 can comprise any suitable hydrophobic material which is
compatible with coating 20 and fusible thereto. For example,
binder 24 preferably comprises the same hydrophobic material
which forms coating 20 and that is most preferably polytetrafluoroethylene, although other binders such as other fluorinated polymers can be used. It will be noted that as shown in Fig. 3, layer 16 is bonded to collector 12 through coating 20, since binder 24 of layer 16 forms a continuum with coating 20. Preferably, binder 24 is utilized in layer 16 in a concentration of between about 5 and about 40%, by weight of the total of the binder and the carbon particles. It will be noted that the carbon particles themselves are preferably activated carbon or activated graphite and need not contain any trace metals to improve their catalytic activity. Such particles 22 are uniformly distributed throughout binder 24.

In accordance with the present method, carbon particles 22 are mixed together with a sufficient amount of binder 24 to bind carbon particles 22 into a coherent layer 16 or 18. Binder 24 may be initially present in the form of a water-polymer emulsion from which water is subsequently removed during further processing of this mixture. Further in accordance with the present method, the coated collector 12 and the mixture of carbon particles 22 and binder 24 are pressed together to form layers 16 and 18 directly on collector 12. In so doing, the carbon-binder mixture penetrates the pores 26 in mesh screen 14 to help lock layers 16 and 18 in place.

Any suitable pressing conditions can be used, for example, cold pressing can be effected at between about 800 and about 1000 p.s.i. and ambient temperature, followed by a sintering step at about 550 to about 650°F. for example, for about 5 minutes, in the event the binder and coating are polytetrafluoroethylene, to remove residual water and fuse binder 24 and coating 20 together. The sintering conditions will vary, depending on the particular binders and coatings utilized.

Alternatively, hot pressing can be carried out, for example, at about between 800 and about 1000 p.s.i. and about 600°F to simultaneously remove any volatiles from binder 24 and to fuse binder 24 and coating 20 together to form the unitary electrode 10. Again, the hot pressing conditions will vary, depending on the par-

0028922

ticular binder and coating utilized. The cold and hot pressing can be accomplished with pressure plates, rolls, etc.

It will be understood that electrode 10 could be formed into any desired size and shape, in addition to that depicted in Figs. 1 to 3 and that current collector 12 could be, if desired, totally enclosed within layers 16 and 18. A current lead (not shown) can be connected to collector 12 before or after fabrication of electrode 10.

It is also possible to simultaneously form coating 20 and layers 16 and 18 by using an excess amount of binder 24 in the carbon particle-binder mix so that as pressing begins the excess binder will flow over the surface of collector 12 to form coating 20. However, it usually is more convenient to dip collector 12 into coating material and then allow coating 20 to dry in place on the surface of collector 12. The pressing operation, whether cold pressing or hot pressing, establishes an electrical connection between the carbon particles 22 and collector 12 even if coating 20 is initially formed completely around collector 12, since some of particles 22 will be pressed against collector 12. Layers 16 and 18 usually are each about 0.01 - 0.1 inches thick, with preferred thicknesses of about 0.02 - 0.04 inches.

The following specific examples further illustrate certain features of the present invention.

## EXAMPLE I

An improved throw-away electrode for metal-air electrochemical cells was prepared by first mixing together a selected binder and carbon particles, 70% by weight of which carbon particles had an average diameter below 35μ and 95% by weight of which had an average diameter below 150μ. The binder was polytetrafluoroethylene and was used in a concentration in the carbon-binder mixture of 30% by volume of the mixture, the remainder being the carbon particles. This concentration of particles was sufficient to enable the carbon particles to bond together into a coherent layer.

The described mixture was applied to opposite sides of a current collector consisting of a sheet of iron five inches long, three inches wide., having a thickness designated 5 Fe 8-4/0 having 625 diamond shaped openings per square inch, each opening having major diameter of 0.077 inch and a minor diameter of 0.038-0.046 inch. The application of the mixture occurred after the current collector had been sprayed with a 1 mil thick coating of polytetrafluoroethylene in the form of an aqueous emulsion and after the coating was dried in place at 200°F. The carbon-binder mixture was then applied to opposite sides of the coated collector in a thickness sufficient to yield, upon hot pressing of the mixture, coherent layers having an average thickness of about 1 mil. The hot pressing was carried out at 800 p.s.i. and 550°F for five minutes. After cooling, the thus-formed electrode was ready for use.

When this electrode was tested with zinc as a counterelectrode in a cell, this electrode's lifetime was determined as the length of time required to reduce the cell's voltage from an initial voltage of 1.15 volts to 0.8 volts at a current density of 400 mA/in$^2$. The lifetime was found to be 40 hours, demonstrating that this eelctrode was superior in electrical properties as well as inexpensive.

### EXAMPLE II

A throw-away electrode was prepared in accordance with the present invention utilizing the procedure of Example I except that the binder was polyfluoropropylene and the carbon particles were graphite, 70% by weight of which had an average particle diameter below 74μ and 95% by weight of which had an average particle diameter below 150μ. The binder-graphite mixture contained 10% by weight of the binder, with the remainder constituting the graphite. The collector was expanded copper metal approximately 3 inches long, 2 inches wide, having a thickness designated 5Cu 8-4/0 and having openings of the same number per square inch, and the same shape and size as specified for the iron collector of Example I. After the collector had been dipped into an aqueous emulsion of polyfluoropropylene and after the resulting coating had been dried to 0.5 mil. thickness thereon at 200°F, the binder-graphite layers were applied to and bonded to opposite sides of the collector at 1000 p.s.i. and 650°F over a period of five minutes. Each bonded layer so formed had an average thickness of about 1 mil.

The resulting electrode was tested against zinc as a counter electrode in a cell. The lifetime of the electrode was determined as being the time required for the initial cell voltage of 1.15 volts to drop to 0.8 volts at a current desnity of 800 mA/in$^2$. This lifetime was found to be 25 hours. Therefore, novel electrode domonstrated superior electrical properties as well as low cost.

The above two specific examples clearly demonstrate the desirable electrochemical features of the inexpensive electrode (cathode) of the present invention made in accordance with the method of the present invention. Such electrode has been shown to function satisfactorily in typical metal-air electrochemical cells and batteries. The low cost of these electrodes in comparison with conventional electrodes used for similar purposes makes these electrodes particularly useful for non-rechargeable applications.

Various other modifications, changes, alterations and additions can be made in the improved electrode of the present invention, its components and parameters and in the improved method of the present invention, its components and parameters. All such modifications, changes, alterations and additions as are within the scope of the appended claims form part of the present invention.

1. An improved inexpensive self-supporting throwaway electrode for metal air electrochemical cells and batteries, said electrode comprising, in combination:

a) readily corrodible inexpensive current collector containing a hydrophobic coating; and

b) an electrochemically active layer secured to said current collector through said coating to form a self-supporting electrode, said layer comprising, in combination,

i. particulate carbon catalyst, and

ii. hydrophobic binder in an amount sufficient to bind said carbon particles into a coherent layer, said binder joining said coating to at least partially protect said collector from rapid corrosion during operation of said electrode.

2. An improved electrode according to claim 1 wherein said binder is present in a concentration of about 5 - 40%, by weight of the total of said binder and said catalyst.

3. An improved electrode according to claim 2 wherein said current collector comprises iron and/or copper.

4. An improved electrode according to claim 2 wherein said current collector is a porous self-supporting grid and wherein said coating comprises polytetrafluoroethylene.

5. An improved electrode according to claim 2 wherein said current collector and coating are enclosed by said electrochemically active layer.

6. An improved electrode of claim 4 wherein said binder comprises polytetrafluoroethylene and carbon.

7. An improved electrode according to claim 5 wherein said polytetrafluoroethylene in said binder is present in a concentration of about 5 to about 40%, by weight of said binder and said carbon and wherein saidcarbon particles have an average diameter of about 20 to about 200.

8. An improved electrode according to claim 1 wherein said carbon particles comprises graphite particles and have an average particle diameter of about 20 to about 200.

9. An improved electrode according to claim 7 wherein said coating has an average thickness of about 0.1 - 1 mil.

10. An improved method of making an inexpensive self-supporting throwaway electrode for metal-air electrochemical cells and batteries, said method comprising:

a. coating a readily corrodible inexpensive current
collector with a hydrophobic coating;

b. mixing together particulate carbon catalyst and
an amount of hydrophobic binder sufficient to
bind said carbon particles into a coherent layer,
said binder being fusible with said coating, and

c. pressing said coated collector and said carbon-binder
mixture together into a unitary electrode with said
coating fused to said binder.

11. An improved method according to claim 10 wherein said
pressing is effected at about 900 psi and about $600^{o}$F. for
about 5 minutes.

*Fig. 1*

*Fig. 2*

*Fig. 3*